# DEMANDE DE BREVET EUROPEEN

(11) **EP 2 009 855 A1**
(43) Date de publication de la demande: **31.12.2008**
(21) Numéro de dépôt: 08305345.4
(22) Date de dépôt: 27.06.2008
(51) Int. Cl.: H04L 12/56

(54) **Procédé d'assignation d'une étiquette amont contenant une information contextuelle dans un réseau de communication à communication d'étiquettes**

(30) Priorité: 29.06.2007 FR 0704722
(71) Demandeur: Alcatel Lucent, 75008 Paris (FR)
(72) Inventeur: Brehon, Yannick, 75014, PARIS (FR); Ciavaglia, Laurent, 92120, MONTROUGE (FR)
(74) Mandataire: Thibaud, Jean-Baptiste

(57) **Abrégé**

L'invention concerne un procédé d'assignation d'une étiquette par l'amont d'un chemin de commutation d'étiquettes LSP-client (3, 4) entre deux noeuds périphériques LER d'un réseau MPLS de communication à commutation d'étiquettes, ledit chemin LSP-client étant imbriqué dans au moins un chemin LSP-serveur P2MP (1, 2), dans lequel une information locale entre les noeuds est déterminée pour être stockée dans ladite étiquette, ledit procédé prévoyant d'insérer dans ladite étiquette une information contextuelle comprenant un identifiant du noeud périphérique initiateur du chemin LSP-client (3, 4). L'invention concerne également un tel réseau MPLS de communication, ainsi qu'un noeud périphérique initiateur et un noeud périphérique terminateur (C) pour un tel réseau.

## Description

L'invention concerne un procédé d'assignation d'une étiquette amont d'un chemin de commutation d'étiquettes LSP-client entre deux noeuds LSR d'un réseau MPLS de communication à commutation d'étiquettes, un tel réseau MPLS de communication, ainsi qu'un noeud initiateur et un noeud terminateur pour un tel réseau.

L'invention s'applique en particulier à un réseau utilisant un protocole MPLS (pour MultiProtocol Label Switching) pour le routage des données, tel que standardisé par l'IETF (pour Internet Engineering Task Force).

De façon principale, un réseau MPLS comprend une pluralité d'éléments de réseau définissant des noeuds LSR (pour Label Switching Router) tels que des commutateurs ou routeurs à commutation d'étiquettes qui sont couplés entre eux.

Préalablement à l'envoi du flux de données entre des noeuds LSR, les chemins LSP sont établis et validés de sorte à envoyer le flux de façon logique dans les chemins LSP.

On appelle noeud initiateur d'un chemin LSP un noeud LSR situé à la source de la connexion et noeud terminateur d'un chemin LSP un noeud LSR situé à la destination de la connexion, des noeuds LSR pouvant être répartis le long du chemin LSP pour permettre la commutation des données le long de la connexion. En général, la plupart des noeuds LSR d'un réseau MPLS sont capables de remplir les fonctions de noeud initiateur et de noeud terminateur pour des chemins LSP, notamment les noeuds périphériques (ou Edge LSR).

De façon classique, l'établissement d'un chemin LSP est demandé au noeud terminateur par le noeud initiateur de sorte à définir une information locale de commutation entre chacun des noeuds adjacents du chemin LSP.

Cette information locale est stockée dans une étiquette qui est incluse dans le paquet MPLS, paquet qui comprend en outre notamment l'adresse IP et les données à communiquer. La valeur de l'étiquette est fixée par le noeud en aval (côté destination du flux) et communiquée au noeud en amont (côté source du flux). Ensuite, chaque noeud, sur la base d'une table d'étiquettes, peut commuter une étiquette entrante par une étiquette sortante pour le routage du paquet à destination du noeud suivant sur le chemin LSP. Enfin, au niveau du noeud terminateur, l'étiquette peut être supprimée pour retrouver le paquet de données initial afin qu'il puisse être traité par un autre protocole ou continuer à être routé dans un réseau IP.

On connaît l'utilisation d'une architecture de type point-à-multipoint (P2MP pour Point to MultiPoint) pour les chemins LSP, dans laquelle un chemin LSP comprend un noeud initiateur et plusieurs noeuds terminateurs auxquels un même flux de données doit être communiqué. Ainsi, il est possible d'optimiser la gestion des flux, notamment en prévoyant d'injecter un seul flux dans le chemin LSP et de gérer la réplication du flux au niveau d'un noeud réplicateur, c'est-à-dire d'un noeud LSR situé à un embranchement entre plusieurs branches menant vers plusieurs noeuds terminateurs du chemin LSP P2MP.

Les réseaux MPLS présentent en particulier l'avantage d'une meilleure optimisation du trafic de données (Traffic Engineering en anglais) en permettant notamment un équilibrage de la charge de trafic entre les différents chemins LSP, une réservation de bande passante, une prise en compte des paramètres de qualité de service dans le choix des chemins LSP....

En outre, pour réduire la complexité et le volume des tables de commutation des noeuds LSR ou pour permettre de gérer l'ingénierie de trafic à différents niveaux de granularité, on peut utiliser l'imbrication (nesting en anglais) d'un ou plusieurs LSP dit client dans un LSP dit serveur. L'imbrication peut être effectuée sur un ou plusieurs niveaux successifs. Pour ce faire, on trouve dans un paquet MPLS une pile d'étiquettes (label stack en anglais) comprenant une étiquette pour un LSP-client et, au dessus de l'étiquette LSP-client, une étiquette pour son LSP-serveur dans lequel le flux du LSP-client est imbriqué. Ainsi, la commutation des paquets MPLS dans le chemin LSP-serveur peut se faire sur l'étiquette du chemin LSP-serveur, les étiquettes LSP-client étant masquées pour être réutilisées à la sortie du chemin LSP-serveur. En d'autres termes, dans le référentiel d'un LSP-client, le LSP serveur de niveau immédiatement supérieur dans lequel ce LSP-client est imbriqué présente donc un noeud initiateur et un noeud terminateur qui apparaissent comme adjacents, c'est-à-dire situés à un seul saut de distance. En conséquence, l'étiquette du LSP-client ne change pas de valeur au cours de ce saut. C'est la valeur d'étiquette client insérée par le noeud initiateur du LSP serveur qui est reçue par le noeud terminateur de ce LSP serveur et qui constitue donc une information locale entre eux.

Toutefois, lorsque le LSP-client est un LSP de type P2MP devant être établi dans un LSP-serveur de type P2MP préétabli, l'assignation des étiquettes du chemin LSP-client ne peut plus être fixée de l'aval vers l'amont. En effet, le flux entrant comprendrait alors une étiquette client pour chaque noeud terminateur du LSP serveur, lesquelles seraient gérées par le noeud initiateur et le (ou les) LSR-réplicateur comme des flux distincts à répliquer indépendamment. Il en résulterait que chaque noeud terminateur recevrait, en plus du flux portant l'étiquette client qu'il a requis, les flux portant l'étiquette client requise par les autres noeuds terminateurs du LSP serveur. Outre la perte d'optimisation du trafic de données conférée par l'architecture P2MP, ce procédé d'assignation peut conduire à des erreurs de traitement, par exemple si l'étiquette client demandée par un noeud terminateur du LSP serveur est déjà utilisée par un autre noeud terminateur du LSP serveur.

Pour résoudre ce problème, on a proposé un procédé d'assignation d'une étiquette amont (ULA pour Upstream Label Assignation) d'un chemin LSP-client dans lequel ladite étiquette est fixée par le noeud initiateur du LSP serveur.

Toutefois, le procédé ULA pose le problème de l'unicité de l'étiquette client choisie par chacun des noeuds initiateurs d'un réseau. En effet, dans le cas où un noeud serait terminateur pour deux chemins LSP-serveurs, portant chacun des LSP-clients P2MP et dont chacun des noeuds initiateurs détermine la même étiquette client, il serait impossible pour ledit noeud terminateur de différencier les flux de données provenant de chacun des chemins LSP-client sur la seule base de l'étiquette client.

Pour résoudre ce problème, on a proposé (dans « draft-ietf-mpls-upstream-label-02) de différencier les flux de données arrivant sur un noeud terminateur en utilisant, outre l'étiquette du chemin LSP-client, une information contextuelle dite « par voisin » ou une information contextuelle dite « par tunnel », qui est constituée par une étiquette de plus haut niveau, c'est à dire l'étiquette du tunnel serveur dans lequel le paquet MPLS client est encapsulé.

Toutefois, ces solutions s'avèrent complexes à mettre en oeuvre, notamment en ce qu'elles nécessitent une adaptation du paradigme de routage du protocole MPLS. En particulier, leur implémentation nécessite une mémoire spécifique pour vérifier l'étiquette relativement à l'information supplémentaire utilisée. En outre, elles sont incompatibles avec la fonction de dépilage et effacement de label à l'avant-dernier saut (Penultimate-hop-popping) qui est largement déployée dans les réseaux MPLS existant pour alléger le traitement effectué par le noeud terminateur d'un LSP-serveur.

L'invention vise à résoudre les problèmes mentionnés ci-dessus en proposant en particulier un procédé d'assignation d'une étiquette amont d'un chemin de commutation d'étiquette entre deux noeuds LSR d'un réseau de communication à commutation d'étiquettes.

A cet effet et selon un premier aspect, l'invention propose un procédé d'assignation d'une étiquette amont d'un chemin de commutation d'étiquettes LSP-client entre deux noeuds LSR d'un réseau MPLS de communication à commutation d'étiquettes, ledit chemin LSP-client étant imbriqué dans un chemin LSP-serveur P2MP, dans lequel une information locale entre le noeud initiateur et les noeuds terminateurs du chemin LSP-serveur P2MP est déterminée pour être stockée dans ladite étiquette, ledit procédé prévoyant d'insérer dans ladite information locale une information contextuelle comprenant un identifiant du noeud initiateur du chemin LSP-serveur.

Ainsi, grâce à l'unicité de l'identifiant du noeud initiateur, on crée des espaces de valeurs d'étiquettes distincts qui permettent à un noeud LSR recevant des flux sur plusieurs LSP clients imbriqués dans différents tunnels de distinguer ces flux sur la seule base de l'étiquette cliente.

Selon un deuxième aspect, l'invention propose un réseau MPLS de communication à commutation d'étiquettes comprenant au moins un chemin de commutation d'étiquettes LSP-serveur P2MP dans lequel un chemin LSP-client est imbriqué pour permettre le routage de paquets MPLS client dans ledit chemin LSP-serveur, ledit réseau intégrant un dispositif d'assignation d'une étiquette amont audit chemin LSP-client pour déterminer et stocker dans ladite étiquette une information locale entre le noeud initiateur et les noeuds terminateurs du chemin LSP-serveur P2MP, ledit dispositif comprenant un moyen pour insérer dans ladite information locale une information contextuelle comprenant un identifiant du noeud initiateur du chemin LSP-serveur.

Selon un troisième aspect, l'invention propose un noeud initiateur pour établir un chemin LSP-serveur P2MP vers une pluralité de noeuds terminateurs dans un réseau de communication à commutation d'étiquettes, ledit noeud intégrant un dispositif d'assignation d'une étiquette à un chemin de commutation LSP-client imbriqué dans ledit LSP-serveur P2MP, ledit dispositif permettant de déterminer et de stocker dans ladite étiquette une information locale entre le noeud initiateur et lesdits noeuds terminateurs du chemin LSP-serveur P2MP, ledit noeud initiateur intégrant un moyen pour insérer une information contextuelle comprenant son identifiant dans ladite information locale.

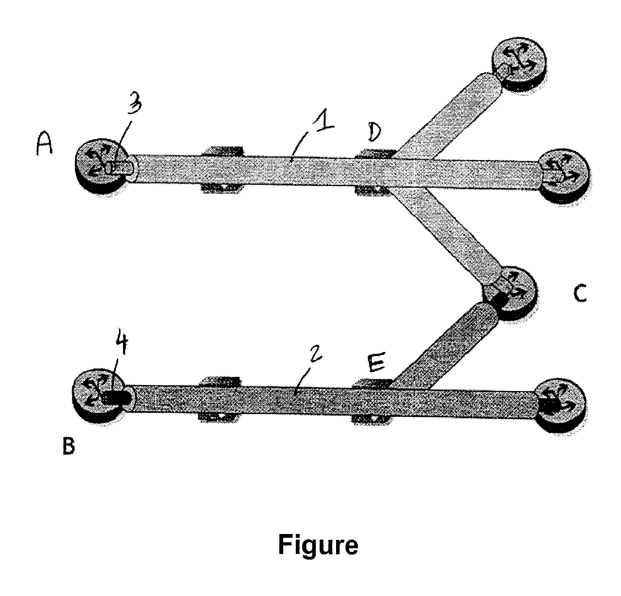

D'autres particularités et avantages de l'invention apparaîtront dans la description qui suit de différents modes de réalisation de l'invention, ladite description étant faite en relation avec la figure annexée représentant de façon schématique deux structures P2MP d'un réseau MPLS qui partagent un noeud terminateur et dans chacune desquelles un chemin LSP-client est imbriqué.

On décrit ci-dessous un réseau de communication d'étiquettes utilisant un protocole MPLS pour le routage des données, ledit réseau comprenant au moins un chemin de commutation d'étiquettes LSP-serveur entre un noeud périphérique initiateur et un noeud périphérique terminateur. En particulier, le chemin LSP comprend au moins un, et en général une pluralité, de noeuds LSR entre lesquels des paquets MPLS sont destinés à être routés suivant le protocole MPLS.

Pour ce faire, un paquet MPLS comprend, outre notamment les données à communiquer, une information locale entre chacun des noeuds adjacents qui permet, par commutation entre les noeuds LSR, d'assurer la communication. En particulier, chaque noeud LSR comprend une table d'étiquettes qui permet la commutation de l'étiquette à fin de routage vers le noeud suivant du chemin LSP.

Dans le réseau décrit, le chemin LSP-serveur considéré est de type P2MP, c'est-à-dire qu'il comprend un noeud initiateur et plusieurs noeuds terminateurs auxquels un même flux de données doit être communiqué par multiplexage au moyen d'un noeud-réplicateur D, E. Sur la figure, le réseau présente un chemin LSP-serveur 1 comprenant un noeud initiateur A et un noeud terminateur C et un chemin LSP-serveur 2 comprenant un noeud initiateur B et le noeud terminateur C.

En outre, dans au moins l'un des chemins LSP-serveur P2MP préétablis, un ou plusieurs chemin LSP-client 3, 4 sont imbriqués. Sur la figure, un chemin LSP-client 3 est imbriqué dans le chemin LSP-serveur 1, et un chemin LSP-client 4 est imbriqué dans le chemin LSP-serveur 1.

Pour ce faire, le paquet MPLS transféré sur le chemin LSP client comprend en outre une étiquette relative au chemin LSP-client 3, 4, ladite étiquette comprenant, à chaque saut, une information locale entre les noeuds adjacents dudit chemin LSP-client. Pour la portion du chemin LSP client qui est imbriquée dans le LSP serveur, les noeuds adjacents sont en fait confondus avec le noeud initiateur et les noeuds terminateurs du LSP serveur. Au niveau de l'entrée dans le LSP-serveur, l'information locale entre les noeuds adjacents du chemin LSP-client est donc déterminée et stockée dans ladite étiquette au moyen d'un dispositif d'assignation d'une étiquette amont (ULA) qui est notamment intégré dans le réseau au niveau du noeud initiateur du LSP serveur.

Le dispositif d'assignation comprend en outre un moyen permettant de déterminer ladite information locale de manière qu'elle contienne un identifiant du noeud initiateur du chemin LSP-serveur 1, 2. Ainsi, la valeur d'étiquette du chemin LSP-client 3, 4 qui est déterminée par le noeud initiateur A, B est forcément unique dans le réseau.

En particulier, l'identifiant du noeud initiateur peut être basé sur une adresse du noeud initiateur. Selon une réalisation, l'étiquette peut comprendre 20 bits, 10 bits étant affectés à l'adresse du noeud initiateur et les 10 autres bits étant affectés par une autre méthode de génération de nombre, par exemple aléatoirement, par incrémentations successives ou par sélection dans un ensemble prédéterminé de valeurs autorisées. Dans un mode de réalisation, l'étiquette du LSP client contient un hachage de l'identifiant du noeud initiateur ou toute autre transformée non équivoque de cet identifiant.

Ainsi, dans le cas représenté d'un réseau comprenant un noeud terminateur C pour deux chemins LSP-serveurs1 et 2 présentant chacun un noeud initiateur différent, le dispositif d'assignation de l'étiquette amont ne peut pas générer la même information locale, le noeud terminateur C peut différencier les flux provenant de chacun des noeuds initiateurs sur la seule base de la valeur d'étiquette cliente.
Sur la figure, les noeuds initiateurs A et B des LSP-serveurs 1 et 2 sont confondus avec les noeuds initiateurs des LSP-clients 3 et 4 imbriqués dans ces LSP-serveurs. Toutefois, ceci n'est pas obligatoire. En d'autres termes, dans un variante non représentée, le noeud initiateur du LSP-client 3 ou 4 peut être à un ou plusieurs sauts de distance du noeud A ou B. De même, il est sans importance que les noeuds terminateurs des LSP-serveurs 1 et 2 soient ou non confondus avec les noeuds terminateurs des LSP-clients 3 et 4 imbriqués dans ces LSP-serveurs. En d'autres termes, l'imbrication peut concerner la totalité ou seulement une partie du trajet d'un chemin LSP client.

## Revendications

1. Procédé d'assignation d'une étiquette par l'amont d'un chemin de commutation d'étiquettes LSP-client (3, 4) entre deux noeuds de routage de chemin à commutation d'étiquette LSR d'un réseau MPLS de communication à commutation d'étiquettes, ledit chemin LSP-client étant imbriqué dans au moins un chemin de commutation d'étiquettes à point vers multiples points LSP-serveur P2MP (1, 2), dans lequel une information locale entre le noeud initiateur et les noeuds terminateurs dudit chemin LSP-serveur P2MP est déterminée pour être stockée dans ladite étiquette, ledit procédé étant **caractérisé en ce qu'**il prévoit d'insérer dans ladite information locale un identifiant du noeud initiateur dudit chemin LSP-serveur.

2. Procédé d'assignation selon la revendication 1, **caractérisé en ce que** l'identifiant du noeud initiateur est unique dans le réseau MPLS.

3. Procédé d'assignation selon la revendication 1 ou 2, **caractérisé en ce que** l'identifiant du noeud initiateur est basé sur une adresse du noeud initiateur.

4. Procédé d'assignation selon l'une quelconque des revendications 1 à 3, **caractérisé en ce que** l'identifiant du noeud initiateur est codé dans l'étiquette sur un nombre de bits défini.

5. Réseau MPLS de communication à commutation d'étiquettes comprenant au moins un chemin de commutation d'étiquettes à point vers multiples points LSP-serveur P2MP (1, 2), dans lequel un chemin de commutation d'étiquettes LSP-client (3, 4) est imbriqué pour permettre le routage de paquets MPLS client dans ledit chemin LSP-serveur, ledit réseau intégrant un dispositif d'assignation d'une étiquette par l'amont audit chemin LSP-client (3, 4) pour déterminer et stocker dans ladite étiquette une information locale entre le noeud initiateur et les noeuds terminateurs dudit chemin LSP-serveur P2MP, ledit réseau étant **caractérisé en ce que** ledit dispositif comprend un moyen pour insérer dans ladite information locale un identifiant du noeud initiateur dudit chemin LSP-serveur.

6. Noeud initiateur pour établir un chemin de commutation d'étiquettes à point vers multiples points LSP-serveur P2MP vers une pluralité de noeuds terminateurs dans un réseau de communication à commutation d'étiquettes, ledit noeud intégrant un dispositif d'assignation d'une étiquette par l'amont à un chemin de commutation d'étiquettes LSP-client (3, 4) imbriqué dans ledit chemin LSP-serveur P2MP, ledit dispositif permettant de déterminer et de stocker dans ladite étiquette une information locale entre le noeud initiateur et les noeuds terminateurs, ledit noeud initiateur étant **caractérisé en ce qu'**il intègre un moyen pour insérer son identifiant dans ladite information locale.
